# EUROPEAN PATENT APPLICATION

(11) **EP 2 690 071 A1**
(43) Date of publication of application: **29.01.2014**
(21) Application number: 12005383.0
(22) Date of filing: 24.07.2012
(51) Int. Cl.: C02F 9/00, C02F 1/20, C02F 1/42, C02F 1/66, C02F 3/02, C02F 103/36

(54) **Method for treating alkaline wastewater**

(71) Applicant: Saudi Basic Industries Corporation, Riyadh 11422 (SA)
(72) Inventor: Bashir, Mubarik Ali, 11422 Riyadh (SA); Rafi, Mohammed Ghouse, 11422 Riyadh (SA)
(74) Representative: Modiano, Micaela Nadia

(57) **Abstract**

The invention provides a method for the treatment of alkaline wastewater comprising sodium ions and organic impurities, the method comprising the steps of a) contacting part of the wastewater with a cation exchange resin to obtain an acidic wastewater portion, b) mixing the acidic wastewater portion and the remaining wastewater portion optionally in the presence of a neutralizing solution to obtain an effluent having a pH of 5 to 9, preferably 6 to 8, more preferably 6.5 to 7.5, more preferably 6.8 to 7.2 and c) reducing the amount of the organic impurities from the effluent.

## Description

The present invention relates to a method for the treatment of alkaline wastewater. In particular, the invention relates to a method for the treatment of alkaline wastewater comprising sodium ions and organic impurities. The invention further relates to a system for the treatment of alkaline wastewater.

Sodium hydroxide is used as catalyst in aldol condensation process. The wastewater from aldol process contains sodium in the form of sodium hydroxide and sodium salt of organic acid, such as sodium butyrate in butyraldehyde condensation process. In known processes for treating alkaline wastewater, the wastewater is first neutralized using sulfuric acid. The light organics are subsequently stripped off in a stream stripper and the stripped aqueous stream is sent to an effluent treatment plant (ETP) where the remaining organic contaminants are biologically treated. The effluent from the ETP is high in sodium and sulfate. The effluent from the ETP requires a further treatment to remove sodium and sulfate in order to comply with prevailing regulations. Typically, the effluent from the ETP can be passed through a reverse osmosis unit to remove sodium and sulfate.

Several ways are known to remove the organic contaminants from wastewater from aldol process. US6139747 discloses a process for cleaning up wastewaters from the preparation of alcohols, said preparation comprising an aldolization reaction and a following hydrogenation. The resulting wastewaters include 3 wastewater fractions from respective steps in the alcohol preparation. The process for cleaning up these wastewaters include the steps of (a) combining two of the three fractions and adjusting the pH of the combination, (b) bringing at least one of the fractions into contact with a coalescing filter, and (c) extracting a mixture of all three fractions. According to US6139747, the wastewater from step (b) has a lower COD (chemical oxygen demand) value, and only a smaller amount of organic compounds must be removed from the wastewater in the extraction.

US6358419 discloses a process for the purification of wastewater from an aldolization reaction of butyraldehyde containing organic impurities. Wastewater from the aldolization reaction is purified by adjusting its pH to 0 to 6, followed by extraction with monohydric alcohols having at least 8 carbon atoms, hydrocarbons having at least 6 carbon atoms, and mixtures thereof. In some cases, adjustment of the pH causes the formation of an organic phase, which is separated from the remaining wastewater before extraction. US6358419 describes that the process has the advantages that it is simple to carry out industrially and it makes it possible to remove at least 90 percent of the organic impurities in the wastewater.

US7943047 discloses a process for the treatment of wastewater from an aldolization process which is contaminated with water-soluble and/or dispersed organic impurities. This is performed by means of single-stage or multistage extraction with an organic liquid of the aldolization process wastewater which has been set to a pH of from 0 to 6. The extracted aldolization wastewater is sent for stripping, and wastewater having a lower content of organic impurities than the aldolization process wastewater fed to the extraction is taken off from the stripping apparatus. US7943047 describes that the process makes it possible to reduce the chemical oxygen demand of the aldolization process wastewater to such an extent that it can be degraded without problems in a water treatment plant.

These documents describe methods to lower the amount of the organic impurities, but do not mention lowering the amount of the inorganic impurities such as sodium ions.

It is an objective of the present invention to provide a method for the treatment of alkaline wastewater comprising sodium ions and organic impurities in which the final effluent contains less inorganic impurities.

Accordingly, the present invention provides a method for the treatment of alkaline wastewater comprising sodium ions and organic impurities, the method comprising the steps of
a) contacting part of the wastewater with a cation exchange resin to obtain an acidic wastewater portion,
b) mixing the acidic wastewater portion and the remaining wastewater portion optionally in the presence of a neutralizing solution to obtain an effluent having a pH of 5 to 9, preferably 6 to 8, more preferably 6.5 to 7.5, more preferably 6.8 to 7.2 and
c) reducing the amount of the organic impurities from the effluent.

The remaining wastewater portion is to be understood as the part of the wastewater which has not been contacted with the cation exchange resin. The neutralizing solution is to be understood as a solution which adjusts the pH closer to 7. If the mixture of the acidic wastewater portion and the remaining wastewater portion is alkaline, the neutralizing solution is an acidic solution. If the mixture of the acidic wastewater portion and the remaining wastewater potion is acidic, the neutralizing solution is an alkaline solution.

The wastewater to be treated by the method according to the present invention is alkaline, i.e. has a pH of higher than 7 and typically higher than 9. In step a), the cation exchange resin lowers the amount of sodium ions in the wastewater. The amount of the sodium ions in the final effluent is thus advantageously lowered. The part of the wastewater which has been contacted with the cation exchange resin becomes acidic, i.e. has a pH of lower than 7. An acidic wastewater portion is thus obtained.

Subsequently, in step b), the acidic wastewater portion is mixed with the remaining wastewater portion which is alkaline, resulting in the acidic wastewater portion and the remaining wastewater portion neutralizing each other.

In the cases where a small portion of the wastewater is contacted with the cation exchange resin, the mixture of the acidic wastewater portion and the remaining wastewater portion is (strongly) alkaline. This may be the case in the embodiments in which less than 40 vol% or 30 vol% of the wastewater is contacted with the cation exchange resin. In the cases where the mixture of the acidic wastewater portion and the remaining wastewater portion is (strongly) alkaline, an acidic solution may be added to obtain an effluent having a pH of 5 to 9, preferably 6 to 8, more preferably 6.5 to 7.5, more preferably 6.8 to 7.2. Accordingly, the present invention provides embodiments in which step b) involves mixing the acidic wastewater portion and the remaining wastewater portion in the presence of an acidic solution to obtain an effluent having a pH of 5 to 9, preferably 6 to 8, more preferably 6.5 to 7.5, more preferably 6.8 to 7.2. This may have an advantage that the cation exchange resin does not require a frequent regeneration.

In the cases where a large portion of the wastewater is contacted with the cation exchange resin, the mixture of the acidic wastewater portion and the remaining wastewater portion is acidic. This may be the case in the embodiments in which more than 60 vol% or 70 vol% of the wastewater is contacted with the cation exchange resin. In the cases where the mixture of the acidic wastewater portion and the remaining wastewater portion is acidic, an alkaline solution may be added to obtain an effluent having a pH of 5 to 9, preferably 6 to 8, more preferably 6.5 to 7.5, more preferably 6.8 to 7.2. Accordingly, the present invention provides embodiments in which step b) involves mixing the acidic wastewater portion and the remaining wastewater portion in the presence of an alkaline solution to obtain an effluent having a pH of 5 to 9, preferably 6 to 8, more preferably 6.5 to 7.5, more preferably 6.8 to 7.2.

Preferably, the ratio between the acidic wastewater portion and the remaining wastewater portion is chosen such that their mixture has a pH of 5 to 9, preferably 6 to 8, more preferably 6.5 to 7.5, more preferably 6.8 to 7.2. Accordingly, the present invention provides embodiments in which step b) involves mixing the acidic wastewater portion and the remaining wastewater portion to obtain an effluent having a pH of 5 to 9, preferably 6 to 8, more preferably 6.5 to 7.5, more preferably 6.8 to 7.2, without an additional neutralizing solution. This is advantageous in that no additional neutralizing solution is necessary and thus the final effluent has a particularly low amount of anions such as SO₄²⁻ or Cl⁻. This may be achieved by embodiments in which 30 to 70 vol%, more preferably 40 to 60 vol% of the wastewater is contacted with the cation exchange resin in step a).

Accordingly, both the amount of sodium ions and the amount of the anions from the neutralizing acidic solution in the final effluent are lowered according to the process of the present invention.

The method can be applied to wastewater from any process in which sodium compounds such as sodium hydroxide are used, especially as a catalyst. Preferably, the wastewater is from an aldolization process, i.e. the aldol addition or the aldol condensation process.

Aldolization process which produces wastewater comprising sodium ions and organic impurities is per se well known, and is described in detail e.g. in US6139747, US6358419 and US7943047.

The addition reaction of activated methylene groups onto the carbonyl groups of aldehydes or ketones, with formation of β-hydroxycarbonyl compounds, is termed aldol addition. In the process of the present invention, the aldol addition is a base catalyzed addition reaction. If elimination of water follows the aldol addition, the reaction is termed aldol condensation. Its products are α,β-unsaturated carbonyl compounds.

Preferably, the aldolization process which produces the wastewater of the present invention is the aldolization of two molecules of the identical aldehyde or identical ketone.

For example, the aldolization process which produces the wastewater of the present invention is the preparation of 2-ethylhexanol from n-butyraldehyde or the preparation of n-valeraldehyde to form 2-propylheptenal. A further example of the aldolization process which produces the wastewater of the present invention is the aldolization of n-butanol to form 2-ethyl 3-propyl acrolein which is subsequently hydrogenated to 2-ethyl hexanol.

The cation exchange resin may be of any known type. For example, the cation exchange resin may be based on crosslinked polystyrene with divinylbenzene. The cation exchange resin may be in the form of beads or membranes. The cation exchange resin is preferably a strongly acidic type. For example, the cation exchange resin may include a resin having a divinyl benzene-styrene copolymer as a backbone and containing a sulfonate group as an exchange group.

The cation exchange resin may be provided in a cation exchange resin tower provided between the chemical production unit which produces the desired product and the wastewater and the neutralization unit. The ion exchange resin tower is packed with the cation exchange resin. The ion exchange resin tower may be formed of a polymeric material or a metal, such as stainless steel, which causes no corrosion under strong basic and acidic environment. A typical example of the ion exchange resin tower is a carbon steel tower with lining of polymeric material such as rubber.

The cation exchange resin needs to be regenerated once exhausted after saturation with sodium ions. The regeneration can be done with an acidic solution such as sulfuric or hydrochloric acid. This step then generates another wastewater stream during regeneration. However, this wastewater stream contains mostly inorganic ions, i.e. sodium and sulfate or chloride, which can be discharged to seawater. The amount of the organic impurities in the wastewater is very small. Optionally, a guard bed of activated carbon filter can be installed downstream of this to retain any organic impurities slipping from the wastewater.

When an acidic solution is used in step b) for pH adjustment, it can be carried out using any strong protic acids, preferably mineral acids such as hydrochloric acid, sulfuric acid, phosphoric acid or nitric acid, particularly preferably sulfuric acid. The pH adjustment of the wastewater can be carried out in any apparatus suitable for mixing two liquids, for example in stirred vessels or static mixers, preferably static mixers. The pH of the aldolization process wastewater can be measured, for example, by means of a glass electrode.

The neutralized effluent from step b) comprises organic impurities which can be in the solution or in the form of finely dispersed, microscopically small droplets or particles. The organic impurities may comprise impurities having lower boiling points (light organic impurities) and impurities having higher boiling points. Accordingly, the organic impurities of the neutralized effluent may be removed in separate steps: first, the light impurities are removed by vaporization using e.g. a steam stripper and the remaining organic impurities are removed in any manner known to the skilled person. Accordingly, the present invention provides a process in which step c) comprises the sub-steps of c1) reducing the amount of volatile organic impurities from the effluent by stripping and c2) subsequently biologically reducing the amount of the remaining organic impurities. This two step removal of the organic impurities provides an effective removal of the organic impurities. Preferably, step c1) is performed by a steam stripper.

The step of biologically reducing the amount of the remaining organic impurities is typically performed under aerobic conditions. Along with microorganism, oxygen and nutrition such as nitrogen and phosphorous are supplied in appropriate concentrations and environment. Any standard technology such as MBR (Membrane Bio Reactor), PACT (Powdered Activated Carbon Treatment) and Disc Aeration can be used. After step c2), the treated effluent is filtered to remove suspended particles.

A further aspect of the present invention provides a system for the treatment of alkaline wastewater comprising sodium ions and organic impurities, the system comprising a neutralization unit for receiving the wastewater from a chemical production unit and providing an effluent having a pH of 5-9, preferably 6-8, preferably 6.5-8.5, preferably 6.8-7.2 and an organic impurities removal unit connected to the neutralization unit for receiving the effluent from the neutralization unit, wherein the system comprises a flow path provided with a cation exchange resin between the chemical production unit and the neutralization unit.

A still further aspect of the present invention provides use of a cation exchange resin for reducing the amount of sodium ions in alkaline wastewater before the pH of the wastewater is adjusted to a pH of 5-9, preferably 6-8, preferably 6.5-8.5, preferably 6.8-7.2. Preferably, the wastewater is from an aldol condensation process.

The present invention will be illustrated herein referring to the drawings in which:
Figure 1 schematically shows an example of a system for the treatment of wastewater of prior art,
Figure 2 schematically shows an example of a system for the treatment of wastewater according to the present invention and
Figure 3 schematically shows a further example of a system for the treatment of wastewater according to the present invention.

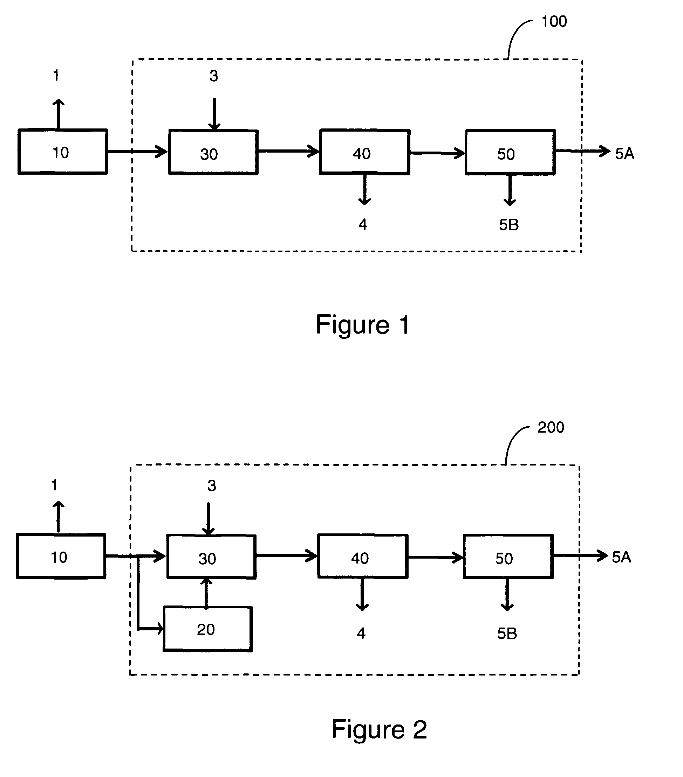

Figure 1 illustrates an example of a system for the treatment of wastewater of prior art. Figure 1 shows a chemical production unit 10 for producing desired chemicals 1 by a process in which sodium hydroxide is used. Wastewater comprising sodium ions and organic impurities is also produced by the chemical production unit 10. The wastewater comprising sodium ions and organic impurities enters a system 100 for the treatment of wastewater from the chemical production unit 10. The system 100 comprises a neutralization unit 30 for receiving the wastewater from the chemical production unit 10. An acidic solution 3 is added to the neutralization unit 30 and the wastewater from the chemical production unit 10 is neutralized therein.

The system 100 further comprises a steam stripper 40 and an effluent treatment plant 50 which together realize the removal of organic impurities. The steam stripper 40 is connected to the neutralization unit 30 and mainly removes light organic impurities 4 from the neutralized effluent by vaporization. The effluent treatment plant 50 is connected to the stream stripper 40 and biologically removes the remaining organic impurities 5B. The final effluent 5A from the ETP 50 has a high content of anions from the acidic solution and sodium ions.

Figure 2 illustrates an example of a scheme showing a chemical production unit 10 and a system 200 for the treatment of wastewater comprising sodium ions and organic impurities according to the present invention.

Figure 2 is identical to Figure 1 except for that the system 200 further comprises a cation exchange tower 20 connected to the chemical production unit 10 and the neutralization unit 30. The cation exchange resin tower 20 is packed with a cation exchange resin.

Part (e.g. less than 40%) of the wastewater from chemical production unit 10 enters the cation exchange tower 20 before entering the neutralization unit 30 and the remaining wastewater directly enters the neutralization unit 30. The cation exchange resin removes the sodium ions from the wastewater and the wastewater received by the neutralization unit 30 comprises less amount of sodium ions than in the prior art system. In this example, the mixture of the treated wastewater and the untreated wastewater is alkaline since the amount of the treated wastewater is small compared to the untreated wastewater mixed in the neutralization unit 30. In this case, an acidic solution 3 is added to the neutralization unit 30 and the mixture is neutralized therein. A less amount of the acidic solution 3 is needed in the neutralization unit 30 compared to the prior art example of Figure 1. The removal of the organic impurities by the steam stripper 40 and the ETP 50 is performed in the same way as in figure 1. The final effluent 5A from the ETP 50 has a lower amount of anions from the acidic solution and sodium ions.

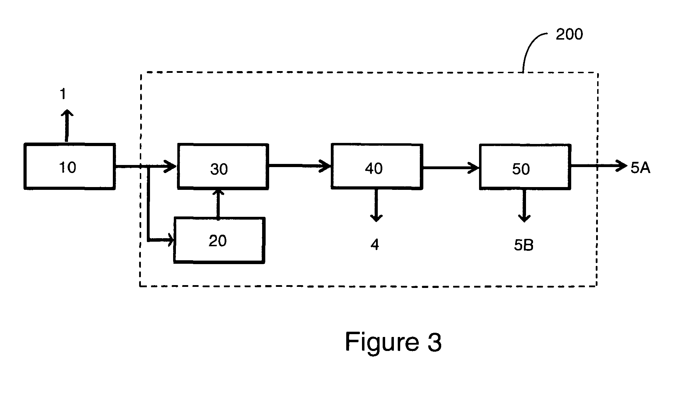

Figure 3 is identical to Figure 2 except for that no acidic solution 3 is added to the neutralization unit 30. In this example, the ratio between the wastewater which enters the cation exchange tower 20 and the wastewater which directly enters the neutralization unit 30 is chosen such that the mixture is neutralized. No acidic solution 3 is needed for the neutralization. The removal of the organic impurities by the steam stripper 40 and the ETP 50 is performed in the same way as in figure 1. The final effluent 5A from the ETP 50 has a lower amount of sodium ions and no anions from the acidic solution for the neutralization.

Experimental:
1. The wastewater was analyzed for pH and the amounts of Na⁺, SO₄²⁻, TDS (total dissolved solids) and TOC (total organic carbon). Following results were obtained: pH: >12, Na: 6100 ppm, SO4: nil, TDS: 17500 ppm, TOC: 7000 ppm
2. 100 mL of strong acid cation exchange resin was put in a 300 mL Pyrex glass column (ID:47.7mm) fitted with a valve at the bottom.
3. This resin was regenerated with 300 mL of HCI solution (30 mL of 32% HCI solution diluted to 300 mL) and the free acid on resin was rinsed with demineralized water.
4. 700 mL of the wastewater was passed slowly over the resin and the treated water was collected at the bottom. The treated water was analyzed to have a pH of 6.0.
5. The used resin was rinsed with demineralized water to remove traces of the wastewater on the resin.
6. The resin was regenerated in the same way as described in Step 3. The effluent from this regeneration step was collected and analyzed for TOC. TOC was found to be 25-35 ppm.
7. The regeneration effluent generated in Step 6 was further treated on granulated activated carbon and the treated water has been analyzed for TOC. TOC was found to be < 1ppm.
8. 15 ml of the treated wastewater as produced in Step 4 (pH: 6.0) was neutralized to pH 7.0 with 13.5 ml of the untreated wastewater (pH: > 12).
9. The neutralized wastewater can be treated to remove the organic impurities.

It can be understood that, if about 50% of the wastewater is treated on the cation resin, then the mixture of the treated wastewater and the untreated wastewater will be self-neutralized and no additional acid (such as H₂SO₄) will be required for neutralization. In this case, Na+ in the final effluent will be reduced by about 50% and SO₄²⁻ will be reduced by about 100% compared to the case where no cation exchange resin is used.

The effluent from the regeneration (from Step 6) has TOC of only 25-35 ppm. This is lower than the control limit for the effluent to be discharged to the sea, which is 150 ppm. However, optionally this effluent can be further treated on granulated activated carbon (as in Step 7) to further reduce the TOC level.

## Claims

1. A method for the treatment of alkaline wastewater comprising sodium ions and organic impurities, the method comprising the steps of
a) contacting part of the wastewater with a cation exchange resin to obtain an acidic wastewater portion,
b) mixing the acidic wastewater portion and the remaining wastewater portion optionally in the presence of a neutralizing solution to obtain an effluent having a pH of 5 to 9, preferably 6 to 8, more preferably 6.5 to 7.5, more preferably 6.8 to 7.2 and
c) reducing the amount of the organic impurities from the effluent.

2. The method according to claim 1, wherein the ratio between the acidic wastewater portion and the remaining wastewater portion is chosen such that their mixture has a pH of 5 to 9 preferably 6 to 8, more preferably 6.5 to 7.5, more preferably 6.8 to 7.2.

3. The method according to claim 1 or 2, wherein the neutralizing solution is an acidic solution.

4. The method according to claim 3, wherein the acidic solution is H₂SO₄ or HCI.

5. The method according to any one of claims 1-4, wherein the wastewater is from an aldol condensation process.

6. The method according to any one of claims 1-5, wherein step c) comprises the sub-steps of c1) reducing the amount of volatile organic impurities from the effluent by steam stripping and c2) subsequently biologically reducing the amount of the remaining organic impurities.

7. The method according to any one of claims 1-6, wherein 30 to 70 vol%, preferably 40 to 60 vol% of the wastewater is contacted with the cation exchange resin in step a).The method according to any one of claims 1-7, wherein the cation exchange resin is regenerated with H₂SO₄ or HCI.

8. A system for the treatment of alkaline wastewater comprising sodium ions and organic impurities, the system comprising a neutralization unit for receiving the wastewater from a chemical production unit and providing an effluent having a pH of 5-9, preferably 6-8, preferably 6.5-8.5, preferably 6.8-7.2 and an organic impurities removal unit connected to the neutralization unit for receiving the effluent from the neutralization unit, wherein the system comprises a flow path provided with a cation exchange resin between the chemical production unit and the neutralization unit.

9. Use of a cation exchange resin for reducing the amount of sodium ions in alkaline wastewater before the pH of the wastewater is adjusted to a pH of 5-9, preferably 6-8, preferably 6.5-8.5, preferably 6.8-7.2.

10. The use according to claim 9, wherein the wastewater is from an aldol condensation process.
